# EUROPÄISCHE PATENTSCHRIFT

(11) **EP 1 598 543 B1**
(45) Veröffentlichungstag und Bekanntmachung des Hinweises auf die Patenterteilung: **04.10.2006**
(21) Anmeldenummer: 05007585.2
(22) Anmeldetag: 07.04.2005
(51) Int. Cl.: F02M 25/07, F16K 11/044, F16K 11/07

(54) **Regelbare Zwei-Wege-Ventilvorrichtung**
Adjustable two-way valve device
Dispositif de soupape à deux voies réglable

(30) Priorität: 18.05.2004 DE 102004024650
(43) Veröffentlichungstag der Anmeldung: 23.11.2005
(73) Patentinhaber: Pierburg GmbH, 41460 Neuss (DE)
(72) Erfinder: Köster, Andreas, 45149 Essen (DE); Dismon, Heinrich, 53538 Gangelt (DE); Röttges, Riedel, 47918 Tönisvorst (DE)
(74) Vertreter: Ter Smitten, Hans

(56) Entgegenhaltungen:
- EP-A- 1 072 784
- WO-A-03/098026
- DE-A1- 10 025 877
- DE-A1- 19 636 806

## Beschreibung

Die Erfindung betrifft eine regelbare Zwei-Wege-Ventilvorrichtung für eine Verbrennungskraftmaschine mit einem Gehäuse, in welchem ein erster Ein- oder Auslaßkanal und ein zweiter und ein dritter wahlweise mit dem ersten Ein- oder Auslaßkanal korrespondierender Aus- oder Einlaßkanal angeordnet ist, wobei eine Ventilstange der Zwei-Wege-Ventilvorrichtung über eine Stelleinheit kontinuierlich translatorisch bewegbar ist.

Derartige regelbare Zwei-Wege-Ventilvorrichtungen sind beispielsweise als kombinierte Abgasrückführ- und Bypassventilvorrichtungen bekannt, bei denen zwei Ventilglieder über eine kontinuierlich verstellbare Stelleinheit betätigt werden, um die Schadstoffemission eines Verbrennungsmotors zu verringern, in dem in der Warmlaufphase das Abgas über den Bypasskanal geführt wird und nach Aufheizen eines Katalysators das Abgas über den Abgaskühler der Verbrennungskraftmaschine zugeführt wird.

Entsprechend wird in der DE 100 25 877 ein Abgasrückführsystem mit einer Ventilvorrichtung beschrieben, welche einen Abgaseinlaß und zwei Abgasauslässe aufweist, wobei einer der Abgasauslässe zu einem Kühler führt und der andere Abgasauslaß fluidisch mit einem den Kühler umgehenden Bypasskanal verbunden ist. An einem Gehäuse des Ventils ist zwischen dem Abgaseinlaß und den beiden Abgasauslässen jeweils ein Ventilsitz angeordnet, der von einem tellerförmigen Ventilglied beherrscht wird. Das Ventilglied ist auf einer Ventilstange angeordnet, die über eine Stelleinheit kontinuierlich bewegbar ist und das zweite näher zur Stelleinheit angeordnete Ventilglied ist auf einer die erste Ventilstange umgebenden zweiten rohrförmigen Ventilstange fest angeordnet. Die Stelleinheit ist so ausgeführt, daß in der Stelleinheit zwei Federn angeordnet sind, über welche die beiden Ventilteller vorgespannt auf ihre Ventilsitze gedrückt werden. Die innere und die äußere Ventilstange sind jeweils verschiebbar zueinander angeordnet, so daß die pneumatische oder elektromotorische Stelleinheit so ausgeführt ist, daß je nach Bewegungsrichtung lediglich eine der Ventilstangen und somit auch nur eines der beiden Ventilglieder vom korrespondierenden Ventilsitz abgehoben wird.

In der DE 198 12 702 A1 wird ebenfalls eine Ventilanordnung zur Steuerung eines rückgeführten Abgasstromes beschrieben, wobei diese hinter einem Bypasskanal und einem Abgaskühler angeordnet sind, so daß diese Ventilanordnung zwei Einlässe und einen Auslaß aufweist. Die beiden jeweils mit einem Ventilsitz korrespondierenden auf der Ventilstange angeordneten Ventilglieder werden über zwei im Kanal angeordnete Schraubenfedern jeweils auf den Ventilsitz gedrückt. Beide Ventilglieder weisen jeweils in der Mitte eine Bohrung auf, durch die zumindest teilweise die gemeinsame Ventilstange reicht. An der Ventilstange sind zwei Bünde ausgebildet, über die die Ventilglieder bei Betätigung der Ventilstange jeweils einzeln in Öffnungsrichtung gegen die Federkraft über den Bund betätigt werden können, wobei das jeweils andere Ventilglied auf der Ventilstange gleiten soll, da es durch die Federkraft auf den Ventilsitz gedrückt wird.

Ebenfalls bekannt sind Zwei-Wege-Ventilvorrichtungen in andersartigen Anwendungsbereichen, wobei diese in aller Regel elektromagnetisch gesteuert werden. Dabei sind beispielsweise im beweglichen Anker der Elektromagnetventile entsprechende Bohrungen angeordnet, die zu im Gehäuse ausgebildeten Ein- beziehungsweise Auslässen korrespondieren. Diese Ventile sind zumeist so ausgeführt, daß genau zwei oder drei verschiedene Stellungen zur Verbindung der unterschiedlichen Wege zueinander angesteuert werden können. Diese sind in der Regel nicht kontinuierlich regelbar und eignen sich beispielsweise nicht zur geregelten Abgasrückführung über einen Kühler oder einen Bypass, da der im Strom befindliche bewegliche Anker zu schmutzempfindlich wäre und ausreichende Strömungsquerschnitte in solchen Ventilen nicht gewährleistet sind.

Zusätzlich ist aus der DE 196 36 806 A1 ein Ventilschieber, der in einem Luftansaugrohr angeordnet ist, bekannt, welcher Steueröffnungen enthält, die mit einem Einführstutzen sowie Öffnungen in der Wand des Luftansaugrohres korrespondieren, so dass durch eine translatorische Bewegung des Ventilschiebers, welcher zylindrisch ausgeführt ist, eine rückgeführte Abgasmenge geregelt werden kann. Ein derartiger Ventilschieber eignet sich jedoch nicht als regelbare Zwei-Wege-Ventilvorrichtung.

Nachteilig an den vorgenannten Ausführungen bekannter regelbarer Zwei-Wege-Ventilvorrichtungen im Bereich der Abgasrückführung ist der hohe Aufwand und die hohe Anzahl an Bauteilen. Die Stelleinheiten bei einer Ausführung mit zwei ineinander laufenden Ventilstangen ist somit sehr aufwendig. Zusätzlich ist auch hier eine hohe Schmutzempfindlichkeit bei Ausführungen mit im Kanal angeordneten Federn und auf der Ventilstange gleitenden Ventilgliedern gegeben, da sich Rußablagerungen an der Ventilstange bilden können, so daß einwandfreie Funktion nicht mehr gewährleistet ist. Des weiteren ist der Herstellungs- und Montageaufwand aufgrund der großen Bauteileanzahl sehr hoch.

Daher ist es Aufgabe der Erfindung, eine regelbare Zwei-Wege-Ventilvorrichtung zu schaffen, bei der zwei Gasströme unabhängig voneinander kontinuierlich regelbar sind, wobei die Bauteilanzahl und somit der Montage- und Herstellungsaufwand sowie die Größe der gesamten Zwei-Wege-Ventilvorrichtung reduziert werden sollen. Hierdurch sollen Kosten- und Gewichtsvorteile erzielt werden. Eine Einsetzbarkeit im Bereich der Abgasrückführung soll erhalten bleiben.

Diese Aufgabe wird dadurch gelöst, daß auf der Ventilstange genau ein Ventilglied fest angeordnet ist, welches eine sich in Bewegungsrichtung der Ventilstange erstreckende Mantelfläche aufweist, in der Steueröffnungen angeordnet sind, die mit dem zweiten Aus- oder Einlaßkanal, der konzentrisch innerhalb des dritten Aus- oder Einlaßkanals angeordnet ist, korrespondieren. Hierdurch kann je nach Stellung des einen Ventilgliedes wahlweise entweder eine fluidische Verbindung zwischen den drei Ein- und Auslasskanälen vollständig unterbrochen werden oder eine im Querschnitt regelbare fluidische Verbindung zwischen dem ersten Ein- oder Auslaßkanal und dem korrespondierenden zweiten Aus- oder Einlaßkanal oder dem dritten korrespondierenden Aus- oder Einlaßkanal hergestellt werden. Somit wird durch eine translatorische Bewegung des einen Ventilgliedes auf einfache Art und Weise eine regelbare Steuerung der Strömungsmassen erzielt. Durch die Reduzierung auf lediglich ein über die Ventilstange betätigtes Ventilglied werden deutliche Bauraum- Gewichts- und Kostenvorteile erzielt.

Vorzugsweise entspricht der innere Umfang der Mantelfläche im wesentlichen einem Außenumfang des inneren der beiden konzentrischen Aus- oder Einlasskanäle und der äußere Umfang der Mantelfläche ist kleiner als der Umfang des umgebenden Gehäuses, durch welches der dritte Aus- oder Einlasskanal gebildet ist. Somit korrespondieren die Steueröffnungen zu dem Inneren der beiden konzentrischen Aus- oder Einlässe, wodurch eine Mengensteuerung zu diesem Aus- oder Einlasskanal über das umgebende Gehäuse ermöglicht wird.

In einer bevorzugten Ausführungsform sind die beiden Umfänge kreisförmig ausgebildet und die Mantelfläche ist zylindrisch ausgebildet, wodurch der Herstellungsaufwand reduziert wird.

Vorzugsweise ist am Ein- oder Austritt zum oder vom ersten Ein- oder Auslasskanal ein Ventilsitz angeordnet, der von einer ersten Steuerfläche des Ventilgliedes beherrscht ist, so dass Strömungen im Bereich des Ventils vollständig verhindert werden können.

Dazu ist die erste Steuerfläche im wesentlichen kegelstumpfförmig ausgebildet und korrespondiert mit der Form des Ventilsitzes und ist am zulaufenden Ende mit der Ventilstange fest verbunden. Die kegelstumpfförmige Steuerfläche ermöglicht eine sehr gute Dosierbarkeit der Strömungsmengen über einen großen Stellbereich des Ventilgliedes.

In einer bevorzugten Ausführungsform sind die Steueröffnungen durch die geschlossene Umfangsfläche des inneren der beiden konzentrischen Aus- oder Einlasskanäle verschließbar und der innere Aus- oder Einlasskanal ist an seiner Stirnseite offen ausgebildet. Somit entsteht ein Strom durch den inneren Aus- oder Einlasskanal sobald die Öffnungen die Außenfläche des innenligenden Kanals nicht mehr vollständig umschließen. In dieser Ausführung ist keine zusätzliche Bearbeitung des innenliegenden Kanals notwendig.

In einer alternativen Ausführungsform sind die Steueröffnungen durch die Umfangsfläche des inneren der beiden konzentrischen Aus- oder Einlasskanäle verschließbar und ist über korrespondierende Steueröffnungen in der Umfangsfläche eine fluidische Verbindung zum innenliegenden Aus- oder Einlasskanal herstellbar, wobei der innere Aus- oder Einlasskanal an seiner Stirnseite geschlossen ausgebildet ist. Hierdurch wird es möglich den innen- und außenliegenden Kanal bei Abheben des Ventilgliedes in umgekehrter Reihenfolge im Vergleich zur ersten Ausführung zu öffnen beziehungsweise zu verschließen.

In einer weiterführenden Ausführungsform ist eine zweite Steuerfläche durch einen sich im Durchmesser erweiternden Bereich der zylindrischen Mantelfläche des Ventilgliedes gebildet, welche einen Durchströmungsquerschnitt zwischen dem Außendurchmesser des inneren konzentrischen Aus- oder Einlasskanals (7) und dem Innendurchmesser des Gehäuses (4, 8) beherrscht und sich mit diesem erweiterten Durchmesser zylindrisch zur von der Ventilstange abgewandten Seite erstreckt. Hierdurch wird es möglich den außenliegenden Kanal zu verschließen, wobei durch die weitere Erstreckung des größeren zylindrischen Bereiches eine bessere Abdichtung erzielt wird. Das gesamte etwa glockenförmige Ventilglied ist aus Blech als Tiefziehteil kostengünstig herstellbar, wobei der Wärmeeintrag in die Ventilstange und somit auch in den Ventilantrieb bei einer derartigen Ausführung sehr gering bleibt, so daß eine Anwendung im Bereich der Abgasrückführung, wo sehr hohe Temperaturen herrschen, ermöglicht wird. Die Toleranzen im Vergleich zum Gehäuse müssen bei einer derartigen Ausführung nicht zu eng gewählt werden, da eine zusätzliche Abdichtung zwischen den beiden konzentrischen Aus- oder Einlaßkanälen aufgrund der vorliegenden Druckdifferenzen nicht notwendig ist. Zusätzlich wird hierdurch die Schmutzempfindlichkeit der Zwei-Wege-Ventilvorrichtung deutlich verringert.

In einer bevorzugten Ausführungsform erstreckt sich der zweite Aus- oder Einlaßkanal bei geschlossenem ersten Ventilsitz etwa bis zur von der Ventilstange entfernten Kante der Steueröffnungen des Ventilgliedes, so daß bei Abheben des Ventilgliedes vom ersten Ventilsitz eine Strömung in oder aus dem inneren konzentrischen Aus- oder Einlaßkanal erfolgt, welche durch weiteres Abheben vom Ventilsitz in ihrer Menge regelbar ist.

In einer weiterführenden Ausführungsform entspricht die Höhe der Steueröffnungen im wesentlichen dem Abstand zwischen dem sich erweiternden Bereich des Ventilgliedes und einer im äußeren konzentrischen Aus- oder Einlasskanal gebildeten Erweiterung bei geschlossenem Ventilsitz. Somit wird gewährleistet, daß sobald die fluidische Verbindung zum inneren Aus- oder Einlaßkanal durch Verschließen der Steueröffnung unterbrochen wird, nun ein Strom in oder aus dem äußeren Aus- oder Einlaßkanal erfolgen kann, welcher in seiner Größe wiederum durch die Stellung des Ventilgliedes regelbar ist, da die Erweiterung des Ventilgliedes mit der entsprechenden Erweiterung des äußeren konzentrischen Aus- oder Einlasskanals korrespondiert und somit unterschiedliche Durchströmungsquerschnitte einstellbar sind.

In der alternativen Ausführung weist der äußere Aus- oder Einlasskanal eine Einschnürung auf, wobei der von der zweiten Steuerfläche beherrschte Strömungsquerschnitt zwischen dem Außendurchmesser des inneren Aus- oder Einlasskanals (7) und dem Innendurchmesser des Gehäuses (8) im Bereich der Einschnürung angeordnet ist und wobei bei geschlossenem Ventilsitz der Abstand zwischen von der Ventilstange wegweisenden Kanten der Steueröffnungen des Ventilgliedes und der zur Ventilstange weisenden Kanten der Steueröffnungen des Aus- oder Einlasskanals im wesentlichem dem Abstand zwischen der von der Ventilstange wegweisenden Kante eines zylindrischen Bereiches des Ventilgliedes und der Einschnürung des äußeren Aus- oder Einlasskanals entspricht. Somit wird bei Verschluß des äußeren Kanals der innere geöffnet, wobei eine Mengenregelung beider Ströme gewährleistet wird.

In einer bevorzugten Ausführungsform ist die Zwei-Wege-Ventilvorrichtung in einer Abgasrückführleitung angeordnet, wobei in Strömungsrichtung vor der Zwei-Wege-Ventilvorrichtung ein Abgaskühler angeordnet ist, der über den innenliegenden Aus- oder Einlasskanal, der als Bypasskanal und Einlasskanal dient, umgehbar ist und wobei der erste Ein- oder Auslasskanal als Auslasskanal zu einem Saugrohr der Verbrennungskraftmaschine dient, und der dritte Aus- oder Einlasskanal als Einlasskanal dient, der mit dem Abgaskühler fluidisch verbunden ist. Die Anordnung hinter der Abgaskühlvorrichtung hat den großen Vorteil, daß die Ventilvorrichtung auf der kälteren Abgasrückführseite möglich ist, wodurch der Wärmeeintrag in das Ventil beziehungsweise die Stelleinheit verringert wird. Das Ventil wird gleichzeitig als Abgasrückführventil als auch als Kühler-/Bypassregelventil verwendet, wobei lediglich ein Ventilglied benötigt wird um beide Ströme unabhängig voneinander in ihrer Menge zu regeln.

In einer hierzu weiterführenden Ausführungsform ist der außenliegende Einlasskanal durch den Abgaskühler gebildet, in dessen Inneren die Bypassleitung angeordnet ist. Dies verringert den Platzbedarf der gesamten Einrichtung erheblich, so dass die gesamte Vorrichtung mit Kühler, Bypass und Abgasrückführventil als Baueinheit hergestellt werden kann.

Es wird deutlich, daß derartige Zwei-Wege-Ventilvorrichtungen zum Einbau in den Abgasrückführkreis einer Brennkraftmaschine geeignet sind, wobei Platz-, Herstellungs- und Montageaufwand im Vergleich zu bekannten Ausführungen deutlich verringert sind. Des weiteren ist dieses Ventil schmutzunempfindlich und weist eine deutlich verringerte Bauteileanzahl auf, wobei eine kontinuierliche Regelbarkeit gewährleistet ist. Die Abdichtung zum Saugrohr findet lediglich über einen Ventilsitz statt, was große Vorteile in Bezug auf Leckagen hat.

Ein Ausführungsbeispiel ist in den Zeichnungen dargestellt und wird nachfolgend beschrieben.

Figur 1 zeigt einen Ausschnitt der erfindungsgemäßen Ventilvorrichtung in dreidimensionaler geschnittener Darstellung.

Figur 2 zeigt die erfindungsgemäße Ventilvorrichtung in vier verschiedenen Stellungen des Ventilgliedes ebenfalls in dreidimensionaler geschnittener Darstellung.

Figur 3 zeigt eine Seitenansicht einer alternative Ausführungsform einer erfindungsgemäßen Ventilvorrichtung in geschnittener Darstellung.

Figur 4 zeigt eine Seitenansicht der Ausführungsform gemäß Fig.3 in zwei verschiedenen Stellungen des Ventilgliedes in geschnittener Darstellung.

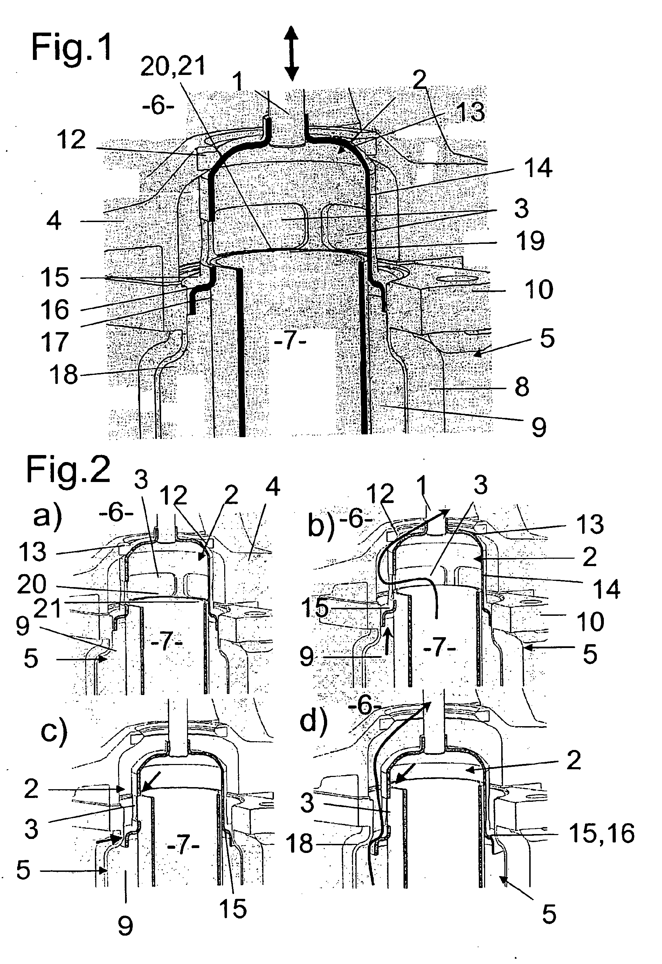

Figur 1 zeigt den erfindungsbegründenden Ausschnitt einer erfindungsgemäßen regelbaren Zwei-Wege-Ventilvorrichtung, wobei eine Ventilstange 1 durch eine nicht mehr dargestellte beispielsweise elektromotrische Stelleinheit kontinuierlich translatorisch in beide Richtungen bewegbar ist, wobei über eine Rückstellfeder eine failsafe Funktion verwirklicht werden kann. An der Ventilstange 1 ist ein glockenförmig ausgebildetes Ventilglied 2 befestigt, welches beispielsweise drei Steuerfenster 3 aufweist, von denen zwei in der vorliegenden Ansicht zu erkennen sind. Dieses glockenförmige Ventilglied 2 sowie die Ventilstange 1 befinden sich in einem Abgasrückführventilgehäuse 4, welches an einem Abgaskühler 5 befestigt ist und einen ersten Ein- oder Auslaßkanal aufweist, der in vorliegendem Ausführungsbeispiel als Auslaßkanal 6 dient und mit einem nicht dargestellten Saugrohr einer Verbrennungskraftmaschine fluidisch verbunden ist.

Im Inneren des Abgaskühlers 5 ist ein zweiter Aus- oder Einlasskanal angeordnet, der als Einlasskanal und Bypassleitung 7 dient, welche vom Abgaskühler 5 konzentrisch umgeben ist, so daß der Abgasstrom entweder durch die Bypassleitung 7 oder durch den Bereich zwischen einem Gehäuse 8 des Abgaskühlers 5 und der Bypassleitung 7 geleitet werden kann, so dass dieser Bereich als dritter Aus- oder Einlasskanal und bei vorliegender Anordnung als Einlasskanal 9 dient. Der Abgaskühler 5 mit der Bypassleitung 7 ist vormontierbar und wird über einen Flanschbereich 10 mit dem Ventilgehäuse 4 unter Zwischenlage einer Dichtung 11 verbunden. Der innere Durchmesser des Gehäuses 8 des Abgaskühlers 5 im Flanschbereich 10 entspricht im wesentlichen dem daran anschließenden inneren Durchmesser des Abgasrückführventilgehäuses 4, wodurch Strömungskanten vermieden werden.

Am Ventilgehäuse 4 ist ein Ventilsitz 12 eingelassen, welcher mit einem kegelstumpfförmigen Bereich 13 des Ventilgliedes 2 korrespondiert, wodurch ein Abgasstrom zum Auslasskanal 6 geregelt wird. Somit wird bei Aufsitzen des ersten kegelstumpfförmigen Bereiches 13 des Ventilgliedes 2, der als erste Steuerfläche dient, auf dem Ventilsitz 12 ein Abgasrückführstrom vollständig unterbrochen.

An den kegelstumpfförmigen Bereich 13 des Ventilgliedes 2 schließt sich ein zylindrisch ausgebildeter Bereich 14 des Ventilgliedes an, in dessen Mantelfläche die Steuerfenster 3 ausgebildet sind. Dieser erstreckt sich in Richtung zum Abgaskühler 5. Der Außendurchmesser des zylindrischen Bereiches 14 des Ventilgliedes 2 ist kleiner zu wählen als der Innendurchmesser des Abgasrückführventilgehäuses 4, während der Innendurchmesser dieses zweiten zylindrischen Bereiches 14 im wesentlichen dem Außendurchmesser der Bypassleitung 7 entspricht.

An diesen zweiten zylindrischen Bereich 14 schließt sich eine zweite Steuerfläche 15 an, die durch einen sich konzentrisch zum zylindrischen Bereich erweiternden Bereich 16 der zylindrischen Mantelfläche 14 gebildet wird. Mit diesem erweiterten Durchmesser erstreckt sich das Ventilglied 2 weiter in Richtung zum Abgaskühler. Der Außendurchmesser dieses sich zylindrisch erstreckenden Bereiches 17 entspricht im wesentlichen dem Innendurchmesser des Abgaskühlers 5 beziehungsweise dem Innendurchmesser des Einlasskanals 9 im Flanschbereich 10. Allerdings weist auch das Gehäuse 8 des Kühlers 5 eine sich an den Flanschbereich 10 anschließende Erweiterung 18 auf, so dass bei Verstellung des erweiternden Bereiches 16 des Ventilgliedes 2 in den Bereich der Erweiterung 18 ein Abgasstrom zwischen der Innenfläche der Erweiterung 18 des Gehäuses 8 des Abgaskühlers 5 und der Erweiterung 16 des Ventilgliedes 2 fließen kann. Durch Abheben des Ventilgliedes 2 von diesem ersten Ventilsitz 12 wird somit eine fluidische Verbindung zwischen der Bypassleitung 7 dem Auslaßkanal 6 über eine stirnseitige Öffnung 19 im Bypasskanal 8 und die Steueröffnungen 3 im Ventilglied 2 hergestellt.

In der Figur 2 sind die jeweiligen Durchströmungsrichtungen durch Pfeile veranschaulicht.

In Figur 2a) ist genauer zu erkennen, daß der kegelstumpfförmige Bereich 13 des Ventilgliedes 2 in einer ersten Stellung am Ventilsitz 12 anliegt, so daß kein Abgas von der Bypassleitung 7 oder vom Abgaskühler 5 beziehungsweise Einlaßkanal 9 zum Auslasskanal 6 strömen kann. In dieser Stellung liegt eine Unterkante 20 der Steuerfenster 3 in einer Querschnittsebene mit einem Ende 21 der Bypassleitung 7, welche leicht in das Gehäuse 4 des Ventils hinein ragt.

In Figur 2b) ist eine zweite Position des Ventilgliedes 2 dargestellt, in der sich der kegelstumpfförmige Bereich 13 leicht vom Ventilsitz 12 abhebt, so daß nun ein Abgasstrom von der Bypassleitung 7 über die Steueröffnungen 3 im zylindrischen Bereich 14 und über den zwischen dem Ventilsitz 12 und dem kegelstumpfförmigen Bereich 13 entstehenden freien Querschnitt zum Auslaßkanal 6 strömen kann. Die hier von der Bypassleitung 7 zum Auslaßkanal 6 strömende Abgasmenge kann durch weitere Verstellung der Ventilstange 1 mit dem Ventilglied 2 geregelt werden, da die Steueröffnungen 3 und somit der freie durchströmbare Querschnitt durch die Steueröffnungen 3 bei weiterer Bewegung des Ventilgliedes 2 in Richtung des Abgaskühlers 5 durch die Mantelfläche des Bypasskanals 7 weiter verschlossen werden, so daß die durch die Steueröffnungen 3 rückgeführte Abgasmenge bei weiterem Verstellen des Ventilgliedes 2 in Richtung des Abgaskühlers 5 verringert wird. Gleichzeitig wird durch die Steuerfläche 15 ein Abgasstrom vom Einlaßkanal 9 zum Auslaßkanal 6 verhindert, da sich die innere Fläche im wesentlichen an die Bypassleitung 6 anlegt und die äußere Fläche sich im wesentlichen an die Innenwand des Flanschbereiches 10 des Abgaskühlers 5 anlegt.

In Figur 2c) ist die translatorische Bewegung des Ventilgliedes 2 weiter geführt, so daß nun die Steueröffnungen 3 durch die Bypassleitung 7 verschlossen werden und gleichzeitig noch der bekannte Verschluß zum Abgaskühler 5 besteht. Diese Position bildet lediglich einen kurzzeitigen Übergang beim Umschalten auf den Kühlerstrom bei inzwischen aufgeheizter Verbrennungskraftmaschine, während die in Figur b) dargestellte zweite Position in der Warmlaufphase des Motors genutzt wird.

In der Figur 2d) ist nun die Stellung des Ventilgliedes 2 nach dem Aufheizen der Verbrennungskraftmaschine dargestellt, wobei der Kühlerstrom über die Ventilkontur des sich erweiternden Bereiches 16 und die Erweiterung 18 des Kühlers 5 geregelt werden kann. Es ist deutlich, daß kein Bypassstrom fließen kann, da eine vollständige Überdeckung der Steueröffnungen 3 weiterhin gegeben ist, während der Querschnitt zwischen dem erweiternden Bereich 16 des Ventilgliedes 2 und der Erweiterung 18 des Kühlers 5 zur Mengenregelung vergrößert werden kann während der Auslaßkanal 6 weiterhin offen ist.

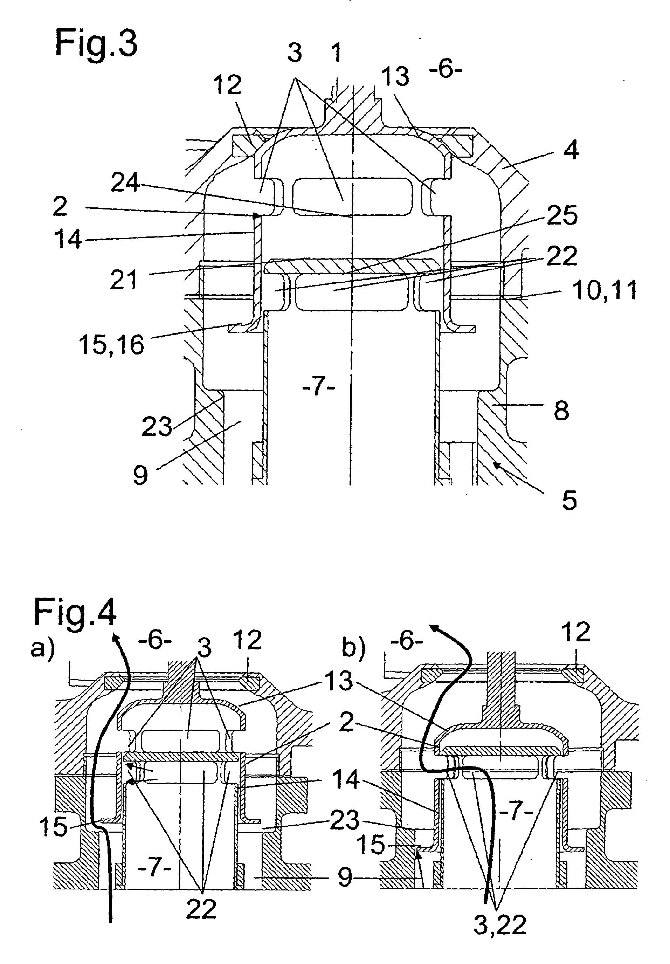

Das in Figur 3 dargestellte Ausführungsbeispiel unterscheidet sich vom ersten insbesondere dadurch, dass der Bypasskanal 7 nun stirnseitig an seinem Ende 21 verschlossen ist und zu den Steueröffnungen 3 korrespondierende Steueröffnungen 22 an der Mantelfläche des Bypasskanals 7 ausgebildet sind. Des weiteren ist der Abstand von den Steueröffnungen 3 des Ventilgliedes 2 zur Steuerfläche 15 deutlich vergrößert, welche in dieser Ausführung nicht mehr den Durchströmquerschnitt zwischen dem Gehäuse 8 des Abgaskühlers 5 und dem Bypasskanal 7 beherrscht, sondern einen Durchströmungsquerschnitt zwischen einer sich an die Erweiterung 18 anschließende Einschnürung 23 des Einlasskanals 9 beziehungsweise des Gehäuses 8 beherrscht.

Daraus ergibt sich, wie aus Fig. 4a) ersichtlich, dass beim Öffnen des Ventilsitzes 12 im Gegensatz zur ersten Ausführungsvariante zunächst der Kühlerstrom vom Kanal 9 zum Auslasskanal 6 gelangt, während die Steueröffnungen 22 des Bypasskanals 7 durch die Mantelfläche 14 des Ventilgliedes 2 noch verschlossen sind. Über den kegelstumpfförmigen Bereich 13 beziehungsweise den Ventilsitz 12 läßt sich so der Abgasstrom in der zumeist genutzten Phase mit Abgaskühlung sehr genau regeln. Der Abstand zwischen von der Ventilstange 1 wegweisenden Kanten 24 der Steueröffnungen 3 des Ventilgliedes 2 und der zur Ventilstange 1 weisenden Kanten 25 der Steueröffnungen 22 des Bypasskanals 7 bei geschlossenem Ventilsitz 12 ist so gewählt, dass er im wesentlichem dem Abstand zwischen der von der Ventilstange 1 wegweisenden Kante des zylindrischen Bereiches 17 des Ventilgliedes 2 und der Einschnürung 23 des äußeren Kühlkanals 9 entspricht. Somit beginnt die Überschneidung der Steueröffnungen 3, 22 bei Bewegung des Ventilgliedes 2 mit Verschluß des Kühlkanals 9. Von der Überschneidung der Steuerflächen 3, 22 ist die strömende Abgasmenge durch den Bypasskanal 7 abhängig.

In Figur 4b) ist eine Position des Ventilgliedes dargestellt, in der der maximale Bypassstrom vom Bypasskanal 7 zum Auslasskanal 6 strömt, da eine vollständige Überdeckung der Steueröffnungen 3 und 22 gegeben ist. Der Durchströmquerschnitt des Kanals 9 für den Kühlerstrom zwischen der Innenwand der Einschnürung 23 und dem Bypasskanal 7 wird gleichzeitig durch die Steuerfläche 15 verschlossen, so dass kein gekühlter Abgasstrom fließen kann.

Eine derartige Ausführung hat den Vorteil, dass zum Realisieren des Abgasstroms über den Kühler die Stellung mit geöffnetem Bypass nicht durchfahren werden muss.

Es wird deutlich, daß derartige regelbare Zwei-Wege-Ventilvorrichtung hervorragend geeignet sind, um im Bereich der Abgasrückführung verwendet zu werden, wobei im Vergleich zu bekannten Ausführungen eine geringere Schmutzempfindlichkeit vorliegt und die Bauteileanzahl und somit der Bauraumbedarf, Herstellungs- und Montageaufwand deutlich reduziert werden können.

Des weiteren sollte klar sein, daß der Schutzbereich nicht auf die vorliegenden Ausführungs- und Anwendungsbeispiele beschränkt ist, sondern sich ein derartiges Zwei-Wege-Ventil für verschiedene Anwendungen, insbesondere bei notwendiger Wärmebeständigkeit und Schmutzunempfindlichkeit, eignet. Modifikationen bezüglich des Aufbaus bzw. der Anordnung insbesondere der beiden Gehäuse zueinander sind selbstverständlich möglich, ohne den Schutzbereich der Ansprüche zu verlassen. So können beispielsweise der Bypasskanal und die Gehäuseerweiterungen und Einschnürungen auch vollständig im Ventilgehäuse ausgebildet sein.

## Patentansprüche

1. Regelbare Zwei-Wege-Ventilvorrichtung für eine Verbrennungskraftmaschine mit einem Gehäuse, in welchem ein erster Ein- oder Auslaßkanal und ein zweiter und ein dritter wahlweise mit dem ersten Ein- oder Auslaßkanal korrespondierender Aus- oder Einlaßkanal angeordnet ist, wobei eine Ventilstange der Zwei-Wege-Ventilvorrichtung über eine Stelleinheit kontinuierlich translatorisch bewegbar ist, **dadurch gekennzeichnet, daß** auf der Ventilstange (1) genau ein Ventilglied (2) fest angeordnet ist, welches eine sich in Bewegungsrichtung der Ventilstange (1) erstreckende Mantelfläche (14) aufweist, in der Steueröffnungen (3) angeordnet sind, die mit dem zweiten Aus- oder Einlaßkanal (7), der konzentrisch innerhalb des dritten Aus- oder Einlaßkanals (9) angeordnet ist, korrespondieren.

2. Regelbare Zwei-Wege-Ventilvorrichtung nach Anspruch 1, **dadurch gekennzeichnet, daß**, der innere Umfang der Mantelfläche (14) im wesentlichen einem Außenumfang des inneren der beiden konzentrischen Aus- oder Einlasskanäle (7) entspricht und der äußerer Umfang der Mantelfläche (14) kleiner ist als der Umfang des umgebenden Gehäuses (4, 8), durch welches der dritte Aus- oder Einlasskanal (9) gebildet ist.

3. Regelbare Zwei-Wege-Ventilvorrichtung nach Anspruch 2, **dadurch gekennzeichnet, daß** die beiden Umfänge kreisförmig sind und die Mantelfäche (14) zylindrisch ausgebildet ist.

4. Regelbare Zwei-Wege-Ventilvorrichtung nach einem der vorhergehenden Ansprüche, **dadurch gekennzeichnet, daß** am Ein- oder Austritt zum oder vom ersten Ein- oder Auslasskanal (6) ein Ventilsitz (12) angeordnet ist, der von einer ersten Steuerfläche (13) des Ventilgliedes (2) beherrscht ist.

5. Regelbare Zwei-Wege-Ventilvorrichtung nach Anspruch 4, **dadurch gekennzeichnet, daß** die erste Steuerfläche (13) im wesentlichen kegelstumpfförmig ausgebildet ist, mit der Form des Ventilsitzes (12) korrespondiert und am zulaufenden Ende mit der Ventilstange (1) fest verbunden ist.

6. Regelbare Zwei-Wege-Ventilvorrichtung nach einem der Ansprüche 2 bis 5, **dadurch gekennzeichnet, daß** die Steueröffnungen (3) durch die geschlossene Umfangsfläche des inneren der beiden konzentrischen Aus- oder Einlasskanäle (7) verschließbar sind und der innere Aus- oder Einlasskanal (7) am stirnseitigen Ende (21) offen ausgebildet ist.

7. Regelbare Zwei-Wege-Ventilvorrichtung nach einem der Ansprüche 2 bis 5, **dadurch gekennzeichnet, daß** die Steueröffnungen (3) durch die Umfangsfläche des inneren der beiden konzentrischen Aus- oder Einlasskanäle (7) verschließbar sind und über korrespondierende Steueröffnungen (22) in der Umfangsfläche des inneren Aus- oder Einlasskanals (7) eine fluidische Verbindung vom Ein- oder Auslasskanal (6) zum inneren Aus- oder Einlasskanal (7) herstellbar ist, wobei der innere Aus- oder Einlasskanal (7) an seinem stirnseitigen Ende (21) geschlossen ausgebildet ist.

8. Regelbare Zwei-Wege-Ventilvorrichtung nach einem der vorhergehenden Ansprüche, **dadurch gekennzeichnet, dass** eine zweite Steuerfläche (15) durch einen sich im Durchmesser erweiternden Bereich (16) der zylindrischen Mantelfläche (14) des Ventilgliedes (2) gebildet ist, welche einen Durchströmungsquerschnitt zwischen dem Außendurchmesser des inneren konzentrischen Aus- oder Einlasskanals (7) und dem Innendurchmesser des Gehäuses (4, 8) beherrscht und sich mit diesem erweiterten Durchmesser (16) zylindrisch zur von der Ventilstange (1) abgewandten Seite erstreckt.

9. Regelbare Zwei-Wege-Ventilvorrichtung nach Anspruch 6, **dadurch gekennzeichnet, daß** sich der innere Aus- oder Einlasskanal (7) bei geschlossenem ersten Ventilsitz (12) etwa bis zu einer von der Ventilstange (2) entfernten Kante (20) der Steueröffnungen (3) des Ventilgliedes (2) erstreckt.

10. Regelbare Zwei-Wege-Ventilvorrichtung nach Anspruch 9, **dadurch gekennzeichnet, daß** die Höhe der Steueröffnungen (3) im wesentlichen dem Abstand zwischen dem sich im Durchmesser erweiternden Bereich (16) des Ventilgliedes (2) und einer im äußeren konzentrischen Aus- oder Einlasskanal (9) gebildeten Erweiterung (18) bei geschlossenem Ventilsitz (12) entspricht.

11. Regelbare Zwei-Wege-Ventilvorrichtung nach Anspruch 7, **dadurch gekennzeichnet, dass** der äußere Aus- oder Einlasskanal (9) eine Einschnürung (23) aufweist, wobei der von der zweiten Steuerfläche (15) beherrschte Strömungsquerschnitt zwischen dem Außendurchmesser des inneren Aus- oder Einlasskanals (7) und dem Innendurchmesser des Gehäuses (8) im Bereich der Einschnürung (23) angeordnet ist und wobei bei geschlossenem Ventilsitz (12) der Abstand zwischen von der Ventilstange (1) wegweisenden Kanten (24) der Steueröffnungen (3) des Ventilgliedes (2) und der zur Ventilstange (1) weisenden Kanten (25) der Steueröffnungen (22) des Aus- oder Einlasskanals (7) im wesentlichem dem Abstand zwischen der von der Ventilstange (1) wegweisenden Kante eines zylindrischen Bereiches (17) des Ventilgliedes (2) und der Einschnürung (23) des äußeren Aus- oder Einlasskanals (9) entspricht.

12. Regelbare Zwei-Wege-Ventilvorrichtung nach einem der vorhergehenden Ansprüche, **dadurch gekennzeichnet, daß** die Zwei-Wege-Ventilvorrichtung in einer Abgasrückführleitung angeordnet ist, wobei in Strömungsrichtung vor der Zwei-Wege-Ventilvorrichtung ein Abgaskühler (5) angeordnet ist, der über den zweiten Aus- oder Einlasskanal (7), der als Bypass- und Einlasskanal dient, umgehbar ist und wobei der erste Ein- oder Auslasskanal (6) als Auslasskanal zu einem Saugrohr der Verbrennungskraftmaschine dient, und der dritte Aus- oder Einlasskanal (9) als Einlasskanal dient, der mit dem Abgaskühler (5) fluidisch verbunden ist.

13. Regelbare Zwei-Wege-Ventilvorrichtung nach Anspruch 12, **dadurch gekennzeichnet, daß** der außenliegende Einlasskanal (9) durch ein Gehäuse (8) des Abgaskühlers (5) gebildet ist, in dessen Inneren die Bypassleitung (7) angeordnet ist.

## Claims

1. Adjustable two-way valve device for an internal combustion engine, with a housing in which a first inlet or outlet port and a second and a third outlet or inlet port, optionally corresponding with the first inlet or outlet port, are disposed, wherein a valve stem of the two-way valve device can be continuously moved in translatory fashion via an actuating unit, **characterised in that** a valve member (2) is firmly disposed precisely on the valve stem (1), which member has a surface area (14) which extends in the direction of movement of the valve stem (1) and in which control openings (3) are disposed, which openings correspond with the second outlet or inlet port (7), which is disposed concentrically inside the third outlet or inlet port (9).

2. Adjustable two-way valve device according to Claim 1, **characterised in that** the inner circumference of the surface area (14) corresponds substantially to an outer circumference of the inner of the two concentric outlet or inlet ports (7), and the outer circumference of the surface area (14) is smaller than the circumference of the surrounding housing (4, 8), through which the third outlet or inlet port (9) is formed.

3. Adjustable two-way valve device according to Claim 2, **characterised in that** the two circumferences are circular and the surface area (14) is cylindrical.

4. Adjustable two-way valve device according to any one of the preceding Claims, **characterised in that** a valve seat (12) is disposed at the entrance to or the exit from the first inlet or outlet port (6), which seat is controlled by a first control surface (13) of the valve member (2).

5. Adjustable two-way valve device according to Claim 4, **characterised in that** the first control surface (13) is substantially frustoconical, corresponds with the shape of the valve seat (12) and is firmly connected at the tapering end to the valve stem (1).

6. Adjustable two-way valve device according to any one of Claims 2 to 5, **characterised in that** the control openings (3) can be closed by the closed circumferential surface of the inner of the two concentric outlet or inlet ports (7), and the inner outlet or inlet port (7) is open at the front end (21).

7. Adjustable two-way valve device according to any one of Claims 2 to 5, **characterised in that** the control openings (3) can be closed by the circumferential surface of the inner of the two concentric outlet or inlet ports (7), and a fluid connection from the inlet or outlet port (6) to the inner outlet or inlet port (7) can be established via corresponding control openings (22) in the circumferential surface of the inner outlet or inlet port (7), wherein the inner outlet or inlet port (7) is closed at its front end (21).

8. Adjustable two-way valve device according to any one of the preceding Claims, **characterised in that** a second control surface (15) is formed through a region (16) of the cylindrical surface area (14) of the valve member (2) which widens in diameter, which control surface controls a flow cross section between the outer diameter of the inner concentric outlet or inlet port (7) and the inner diameter of the housing (4, 8) and extends with this widened diameter (16) cylindrically towards the side which is remote from the valve stem (1).

9. Adjustable two-way valve device according to Claim 6, **characterised in that**, when the first valve seat (12) is closed, the inner outlet or inlet port (7) extends approximately up to an edge (20) of the control openings (3) of the valve member (2) which is remote from the valve stem (2).

10. Adjustable two-way valve device according to Claim 9, **characterised in that** the height of the control openings (3) corresponds substantially to the distance between the region (16) of the valve member (2) which widens in diameter and a widening (18) formed in the outer concentric outlet or inlet port (9) when the valve seat (12) is closed.

11. Adjustable two-way valve device according to Claim 7, **characterised in that** the outer outlet or inlet port (9) has a contraction (23), wherein the flow cross section which is controlled by the second control surface (15) is disposed between the outer diameter of the inner outlet or inlet port (7) and the inner diameter of the housing (8) in the region of the contraction (23), and wherein, when the valve seat (12) is closed, the distance between edges (24) of the control openings (3) of the valve member (2) which point away from the valve stem (1) and the edges (25) of the control openings (22) of the outlet or inlet port (7) which point towards the valve stem (1) corresponds substantially to the distance between the edge of a cylindrical region (17) of the valve member (2) which points away from the valve stem (1) and the contraction (23) of the outer outlet or inlet port (9)

12. Adjustable two-way valve device according to any one of the preceding Claims, **characterised in that** the two-way valve device is disposed in an exhaust gas recirculation line, wherein an exhaust gas cooler (5) is disposed before the two-way valve device in the flow direction, which cooler can be bypassed via the second outlet or inlet port (7), which serves as a bypass port and an inlet port, and wherein the first inlet or outlet port (6) serves as an outlet port to an intake pipe of the internal combustion engine, and the third outlet or inlet port (9) serves as an inlet port which is connected in fluid terms to the exhaust gas cooler (5).

13. Adjustable two-way valve device according to Claim 12, **characterised in that** the outer inlet port (9) is formed by a housing (8) of the exhaust gas cooler (5), in the interior of which the bypass line (7) is disposed.

## Revendications

1. Dispositif de soupape à deux voies réglable pour un moteur à combustion interne comprenant un corps, dans lequel sont disposés un premier conduit d'échappement ou d'admission, un deuxième conduit d'admission ou d'échappement et un troisième conduit d'admission ou d'échappement en correspondance sélective avec le premier conduit d'échappement ou d'admission, une tige de soupape du dispositif de soupape à deux voies étant mobile en translation de façon continue par l'intermédiaire d'une unité de réglage, **caractérisé en ce qu'**un organe de soupape (2) est disposé fixement de façon exacte sur la tige de soupape (1), lequel organe de soupape présente une surface d'enveloppe (14), s'étendant dans la direction de déplacement de la tige de soupape (1) et dans laquelle sont disposées des ouvertures de réglage (3) qui correspondent au deuxième canal d'admission ou d'échappement (7) disposé de façon concentrique à l'intérieur du troisième conduit d'admission ou d'échappement (9).

2. Dispositif de soupape à deux voies réglable suivant la revendication 1, **caractérisé en ce que** le pourtour intérieur de la surface d'enveloppe (14) correspond essentiellement à un pourtour extérieur du conduit intérieur (7) des deux conduits d'admission ou d'échappement concentriques et le pourtour extérieur de la surface d'enveloppe (14) est plus petit que le pourtour du corps d'enveloppe (4, 8), par lequel est formé le troisième conduit d'échappement ou d'admission (9).

3. Dispositif de soupape à deux voies réglable suivant la revendication 2, **caractérisé en ce que** les deux pourtours sont en forme de cercle et la surface d'enveloppe (14) a une configuration cylindrique.

4. Dispositif de soupape à deux voies réglable suivant l'une des revendications précédentes, **caractérisé en ce qu'**un siège de soupape (12), maîtrisé par une première surface de réglage (13) de l'organe de soupape (2), est disposé sur l'admission ou la sortie en direction ou du premier conduit d'échappement ou d'admission (6).

5. Dispositif de soupape à deux voies réglable suivant la revendication 4, **caractérisé en ce que** la première surface de réglage (13) est configurée essentiellement en forme de tronc de cône, correspond à la forme du siège de soupape (12), et est assemblée fixement sur l'extrémité terminale avec la tige de soupape (1).

6. Dispositif de soupape à deux voies réglable suivant l'une des revendications 2 à 5, **caractérisé en ce que** les ouvertures de réglage (3) peuvent être fermées par la surface périphérique fermée du conduit intérieur (7) des deux conduits d'admission ou d'échappement concentriques et le conduit d'admission ou d'échappement intérieur (7) a une configuration ouverte sur l'extrémité (21) côté frontal.

7. Dispositif de soupape à deux voies réglable suivant l'une des revendications 2 à 5, **caractérisé en ce que** les ouvertures de réglage (3) peuvent être fermées par la surface périphérique du conduit intérieur (7) des deux conduits d'admission ou d'échappement concentriques et une liaison fluidique du conduit d'admission ou d'échappement (6) avec le conduit d'admission ou d'échappement intérieur (7) peut être créée par l'intermédiaire d'ouvertures de réglage correspondantes (22) dans la surface périphérique du conduit d'admission ou d'échappement intérieur (7), le conduit intérieur d'admission ou d'échappement (7) ayant une configuration fermée sur son extrémité (21) côté frontal.

8. Dispositif de soupape à deux voies réglable suivant l'une des revendications précédentes, **caractérisé en ce qu'**une seconde surface de réglage (15) est formée par une zone (16) de diamètre élargi de la surface d'enveloppe cylindrique (14) de l'organe de soupape (2), laquelle surface d'enveloppe maîtrise une section transversale d'écoulement entre le diamètre extérieur du conduit d'admission ou d'échappement intérieur concentrique (7) et le diamètre intérieur du corps (4, 8) et s'étend en cylindre par ce diamètre élargi (16) en direction du côté opposé à la tige de soupape (1).

9. Dispositif de soupape à deux voies réglable suivant la revendication 6, **caractérisé en ce que** le conduit d'admission ou d'échappement intérieur (7), en position de fermeture du premier siège de soupape (12), s'étend à peu près jusqu'à une arête (20), distante de la tige de soupape (2), des ouvertures de réglage (3) de l'organe de soupape (2).

10. Dispositif de soupape à deux voies réglable suivant la revendication 9, **caractérisé en ce que** la hauteur des ouvertures de réglage (3) correspond essentiellement à la distance entre la zone (16) de diamètre élargi de l'organe de soupape (2) et un élargissement (18) formé dans le conduit d'admission ou d'échappement concentrique extérieur (9) en position de fermeture du siège de soupape (12).

11. Dispositif de soupape à deux voies réglable suivant la revendication 7, **caractérisé en ce que** le conduit d'admission ou d'échappement extérieur (9) présente un rétrécissement (23), la section transversale d'écoulement maîtrisée par la seconde surface de réglage (15) étant disposée entre le diamètre extérieur du conduit d'admission ou d'échappement intérieur (7) et le diamètre intérieur du corps (8) dans la zone du rétrécissement (23) et, en position de fermeture du siège de soupape (12), la distance entre les arêtes (24), dirigées à l'écart de la tige de soupape (1), des ouvertures de réglage (3) de l'organe de soupape (2) et les arêtes (25), dirigées en direction de la tige de soupape (1), des ouvertures de réglage (22) du conduit d'admission ou d'échappement (7) correspondant essentiellement à la distance entre l'arête, dirigée à l'écart de la tige de soupape (1), d'une zone cylindrique (17) de l'organe de soupape (2) et le rétrécissement (23) du conduit d'admission ou d'échappement extérieur (9).

12. Dispositif de soupape à deux voies réglable suivant l'une des revendications précédentes, **caractérisé en ce que** le dispositif de soupape à deux voies est disposé dans une conduite de recyclage des gaz d'échappement, un refroidisseur de gaz d'échappement (5), disposé dans la direction d'écoulement en amont du dispositif de soupape à deux voies, pouvant être contourné par l'intermédiaire du deuxième conduit d'admission ou d'échappement (7) qui sert de conduit de bipasse et d'admission, le premier conduit d'échappement ou d'admission (6) servant de conduit d'échappement en direction d'un collecteur d'admission du moteur à combustion interne, et le troisième conduit d'admission ou d'échappement (9) servant de conduit d'admission en liaison fluidique avec le refroidisseur de gaz d'échappement (5).

13. Dispositif de soupape à deux voies réglable suivant la revendication 12, **caractérisé en ce que** le conduit d'admission extérieur (9) est formé par un corps (8) du refroidisseur de gaz d'échappement (5), à l'intérieur duquel est disposée la conduite de bipasse (7).
